# EUROPÄISCHE PATENTSCHRIFT

(11) **EP 2 826 718 B1**
(45) Veröffentlichungstag und Bekanntmachung des Hinweises auf die Patenterteilung: **29.06.2016**
(21) Anmeldenummer: 14170019.5
(22) Anmeldetag: 27.05.2014
(51) Int. Cl.: B65C 3/06, B65G 29/00, B65G 47/84, B67C 7/00

(54) **Transportvorrichtung für eine Behälterbehandlungsmaschine**
Transport device for a container handling machine
Dispositif de transport pour une machine de traitement de récipients

(30) Priorität: 19.07.2013 DE 102013214185
(43) Veröffentlichungstag der Anmeldung: 21.01.2015
(73) Patentinhaber: Krones AG, 93073 Neutraubling (DE)
(72) Erfinder: Richter, Stefan, 93073 Neutraubling (DE)
(74) Vertreter: Grünecker Patent- und Rechtsanwälte PartG mbB

(56) Entgegenhaltungen:
- WO-A1-2011/048508
- DE-A1- 3 040 096
- DE-A1- 3 416 654
- US-A- 5 029 695
- US-B2- 7 007 793

## Beschreibung

Die Erfindung betrifft eine Transportvorrichtung für eine Behälterbehandlungsmaschine mit einem Transportkarussell, auf dem sich eine Vielzahl von Behälteraufnahmen befinden, und mit mindestens einem Sägezahnstern, dessen Sägezahnkontur eine Vielzahl von Sterntaschen zum Aufnehmen von Behältern bilden, entsprechend Oberbegriff des Anspruches 1. Die vorliegende Erfindung betrifft auch eine Behälterbehandlungsmaschine für aufrechtstehende rotationssymmetrische Behälter.

In der Etikettier-, Füll- oder Inspektionstechnik sind Transportsterne als Fördereinrichtungen für Behälter allgemein bekannt. Insbesondere werden Transportsterne in Fördereinrichtungen verwendet, wo Flaschen verarbeitet und in oder aus einem rotierenden Transportkarussell, das Behälter einem Behandlungsaggregat, beispielsweise einem Etikettier- oder Füllaggregat, zu- und abführt, gefördert werden. Derartige Fördereinrichtungen sind in verschiedenen Ausführungen bekannt. Die Halteelemente des rotierenden Transportkarussells können beispielsweise als steuerbare Drehteller und heb- und senkbare Zentrierglocken ausgebildet sind, welche die dazwischen eingespannten Gefäße an einer Etikettierstation vorbeibewegen. Die Halteelemente können auch als heb- und senkbare Hubteller und mit Füllorganen verbundene Zentrierkegel, gegen welche die Gefäße durch die Hubteller gedrückt werden, gestaltet sein. Um einen einwandfreien Übergang der Gefäße zwischen dem Transportstern und dem Transportkarussell an einer definierten Übergabestelle, im Allgemeinen auf der Verbindungsgeraden zwischen den Drehachsen von Transportstern und Transportkarussell, sicherzustellen, sind der Transportstern und das Transportkarussell bei den bekannten Transportvorrichtungen üblicherweise immer synchron angetrieben bzw. antriebsmäßig untrennbar miteinander verbunden.

Solche Transportvorrichtungen für eine Behälterbehandlungsmaschine beispielsweise einer Etikettiermaschine sind beispielsweise aus der europäischen Patentanmeldung EP-A-11 64 082 oder dem deutschen Patent DE 197 41 476 bekannt.

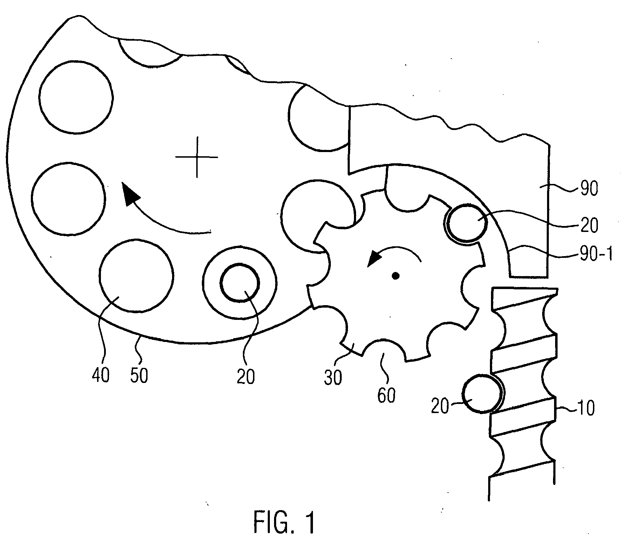

Der grundlegende Aufbau wird in Fig. 1 gezeigt. Grundlegende Bestandteile einer solchen Transportvorrichtung sind ein Einlaufstern 30, ein Transportkarussell 50, eine Einteilschnecke 10, ein Auslaufstern (nicht gezeigt), ein oder mehrere Behälterbehandlungsaggregate (nicht gezeigt) und Halteeinrichtungen (nicht gezeigt) zum Halten von Behältern auf dem Transportkarussell 50. Bei solchen Anordnungen werden Behälter 20 insbesondere rotationssymmetrische Behälter wie Flaschen in einem kontinuierlichen Strom auf einem Förderband (nicht gezeigt) der Einteilschnecke 10 zugeführt, mit dem die Behälter auf eine definierte Distanz zueinander gebracht werden und an einen Einlaufstern 30 übergeben werden, mit dem die Distanz zum Transportkarussell 50 überwunden wird. Den Transportsternen, beispielsweise dem Einlaufstern 30, kommt die Aufgabe zu, die in einer Einzelreihe ankommenden Flaschen bestimmten Bearbeitungsstationen zuzuführen. Die Transportsterne besitzen hierfür an ihrem Außenumfang Ausnehmungen, die sogenannte Sterntaschen, die den jeweiligen Flaschendurchmessern angepasst sind. Deshalb müssen die Transportsterne bei unterschiedlichen Gebinden, deren Größe im Durchmesser abweichen, ausgetauscht werden.

Der Einlaufstern 30 besteht im Allgemeinen aus einem oder mehreren übereinandergestapelten Sternrädern mit Ausnehmungen 60 (Sterntaschen), die der Form des Behälters 20 angepasst sind, so dass der Behälter 20 in der Ausnehmung 60 fixiert wird. Durch die Drehbewegung, die durch die Pfeilrichtung in Fig. 1 angedeutet wird, wird der Behälter 20 in Richtung Transportkarussell 50 transportiert. Bei entsprechendem Timing und Synchronisation der Drehbewegungen des Einlaufsterns 30 und des Transportkarussell 50 wird erreicht, dass zu festgelegten Zeitpunkten eine Ausnehmung 60 des Einlaufsterns 30 genau über einem Teller 40 des Transportkarussells 50, der als Behälteraufnahmevorrichtung fungiert, zu liegen kommt, so dass der Behälter 20 von dem Transportkarussell 50 beispielsweise mit Greiforganen übernommen werden kann. Heb- und senkbare Zentriereinrichtungen über den Tellern 40 halten die Behälter 20 beispielsweise am Flaschenhals und erlauben ein Anheben, Absenken, Drehen und/oder Bewegen auf dem Teller während den Behälterbehandlungsvorgängen beispielsweise Bedrucken, Befüllen, Bekleben mit Etiketten etc. Durch die Drehbewegung des Transportkarussells 50 werden die Behälter 20 an entsprechenden Behälterbehandlungsstationen (nicht gezeigt) vorbeigeführt und behandelt. Am Ende des Drehvorgangs auf das Transportkarussell 50 ist ein Ausgangsstern (nicht gezeigt) angeordnet, der ähnlich aufgebaut ist wie der Eingangsstern 30, und der die Behälter vom Transportkarussell 50 übernimmt und wieder einem kontinuierlichen Behälterstrom auf einem Förderband (in Fig. 1 nicht gezeigt) zuführt.

Bei entsprechend synchronisierter Vorschubbewegung der Zuführschnecke 10 und des Einlaufsterns 30 rutscht der Behälter 20 am Ende der Einlaufschnecke 10 in eine richtig positionierte Ausnehmung 60. Das sich kontinuierlich Sternrad des Einlaufsterns 30 führt den Behälter 20 weiter entlang der Fläche 90-1 eines Führungselements 90, bis die Ausnehmung 60 über einem Teller 40 des Transportkarussells 50, dessen Drehbewegung mit der Drehbewegung des Einlaufsterns 30 synchronisiert ist, positioniert wird. Wenn der Behälter 20 aus dem Bereich der Fläche 90-1 des Führungselements 90 heraustritt, wird der Behälter 20 auf dem Teller 40 abgesetzt, beispielsweise durch eine Öffnung im Boden des Einlaufsterns 30, oder in nicht näher dargestellter Weise mit steuerbaren Greiforganen zum Erfassen und Freigeben der Behälter 20. Üblicherweise sind die Drehbewegungen des Einlaufsterns und des Transportkarussells 50 mit einer gemeinsamen Antriebseinheit verbunden. Zum reibungslosen Transport der Behälter 20 ist es notwendig, dass die Krümmung der Ausnehmung 60 komplementär zur Krümmung des Behälters 20 ist und sich in ihrer Größe entspricht. Die Ausnehmungen des Einlaufsterns 30 in Fig. 1 sind als halbkreisförmige Einschnitte im Sternrad des Einlaufsterns 30 dargestellt, die komplementär zur Behälterform sind. Das heißt, bei einem Behälterwechsel bzw. einem Formatwechsel müssten auch die Sternräder 30 und die Einteilschnecke 10 ausgetauscht werden.

Ein Transportstern gemäß dem Stand der Technik mit weichelastischen Wandungen um Verschleiß und Schallemissionen zu senken wird in der Offenlegungsschrift der deutschen Patentanmeldung DE30 40 096 A1 beschrieben.

Eine Weiterentwicklung eines Transportsterns wird in der DE 697 28 396 gezeigt. In der DE 697 28 396 wird ein Einlaufstern mit sägezahnförmigen Ausnehmungen beschrieben, wodurch es möglich wird, die Funktion des Einlaufsterns 30 und der Einteilschnecke 10 in Fig. 1 zu kombinieren. Das Profil des sägezahnförmigen Ausschnitts setzt sich aus zwei Kurvenabschnitten zusammen, wobei ein Abschnitt dazu dient, Behälter auf einen bestimmten Abstand zu bringen, und der zweite Kurvenabschnitt dient dazu, den Behälter aufzunehmen. Der zweite Kurvenabschnitt ist dabei der Krümmung des Behälters nachgebildet, so dass auch in diesem Fall bei einem Formatwechsel das Sternrad ausgetauscht werden muss. Das Austauschen der Sternräder und auch der Führungselemente 90, sowie die Justierung der Austauschteile ist ein zeit- und kostenintensiver Prozess, der soweit wie möglich vermieden werden soll.

Neben dem Auswechseln der Sternräder gibt es verschiedene Ansätze, um eine Transportvorrichtung für Behälter an verschiedene Behälterdurchmesser anzupassen.

Das deutsche Gebrauchsmuster DE 93 03 027 U1 beschreibt die Verwendung von elastischen Elementen in den Sterntaschen, die der Gefäßform entsprechen, und an den Gefäßführungsvorrichtungen, um eine Anpassung an unterschiedliche Gebindegrößen zu erreichen. Dieser Ansatz hat aber den Nachteil, dass bei stark unterschiedlichen Gefäßdurchmessern trotzdem die Sternräder ausgetauscht werden müssen. Die in diesem Gebrauchsmuster vorgeschlagene Lösung ist nur bei geringen Durchmesservariationen einsetzbar.

In der internationalen Patentanmeldung WO 2011 048 508 wird eine Transportvorrichtring gemäß dem Oberbegriff des Anspruchs 1 offenbart. In diesem Dokument werden Sternräder mit unterschiedlich großen Sterntaschen vorgestellt. Je nach Behältergröße wird bei der Übergabe das Sternrad so positioniert, dass eine entsprechend passende Tasche den Behälter von der Schnecke aufnimmt und zum Karussell transportiert. Der Nachteil dieses Vorschlags ist, dass das Sternrad nur für wenige bestimmte Flaschendurchmesser verwendet werden kann und dass damit auch der Flaschendurchsatz erniedrigt wird, da bei beispielsweise drei unterschiedlichen Taschengrößen der Durchsatz um einen Faktor 3 reduziert wird.

In der schweizer Patentschrift CH 602 448 wird ein Transportstern mit drei Sternrädern, die koaxial übereinander angeordnet sind vorgeschlagen, wobei die Winkelstellung zwischen mittlerem Sternrad und den äußeren beiden Sternrädern so eingestellt werden kann, dass die Sterntasche an den Behälterdurchmesser angepasst werden kann. Der Nachteil ist, dass die Verstellung der Sterntaschengröße manuell für jede Sterntasche extra erfolgen muss, wodurch sich wieder lange Rüstzeiten ergeben. Ebenso ist eine gleichzeitige Behandlung von Behältern mit unterschiedlichen Durchmessern nicht möglich.

In der deutschen Patentanmeldeschrift DE - A - 31 43 511 werden Transportsterne mit verdrehbaren Segmenten beschrieben, die in einem äußeren Bereich des Sternrads befestigt sind. Jedes verdrehbare Segment weist Ausnehmungen (Sterntaschen) mit unterschiedlichem Durchmesser auf, die je nach Flaschendurchmesser am Sternrad nach außen gedreht werden, so dass das Sternrad an verschiedene Flaschengrößen angepasst werden kann. Nachteilig ist wieder, dass die Konstruktion aufwändig und teuer ist. Weiterhin ist nur eine begrenzte Anzahl von unterschiedlichen Flaschen behandelbar.

Es ist deshalb eine Aufgabe der vorliegenden Erfindung, eine Transportvorrichtung zum Transport von aufrechtstehenden rotationssymmetrischen Behältern unterschiedlicher Größe bereitzustellen, das geringe Rüstzeiten beim Formatwechsel ermöglicht.

Die Aufgabe wird gelöst durch eine Transportvorrichtung gemäß dem kennzeichnenden Teil des Anspruchs 1.

Insbesondere wird die Aufgabe gelöst durch eine Transportvorrichtung der eingangs genannten Art, die gekennzeichnet ist durch ein elastisches Element, das im Sägezahnstern integriert ist und das einen Behälter abhängig vom Behälterdurchmesser an einer bestimmten Stelle in einer der Sterntaschen des Sägezahnsterns halten kann; und die weiterhin gekennzeichnet ist durch eine Steuereinrichtung zum Steuern einer Behälterübergabeposition zwischen dem Transportkarussell und dem Sägezahnstern abhängig vom Behälterdurchmesser.

Durch die Sägezahnkontur in Verbindung mit dem elastischen Element ist es möglich, Behälter in einem großen Durchmesserbereich mit dem Sägezahnstern zu fördern, ohne dass eine manuelle Einstellung am Sägezahnstern nötig wäre. Die durch die unterschiedlichen Behälterdurchmesser entstehenden Variationen an der Übergabeposition zwischen dem Sägezahnstern und dem Transportkarussell wird durch das Steuern der Behälterübergabeposition zwischen dem Transportkarussell und dem Sägezahnstern ausgeglichen. Die Rüstzeiten bei einem Formatwechsel, d.h. bei einem Wechsel der Flaschenform und des Flaschendurchmessers, entfallen damit und die Anlage wird effizienter durch die geringeren Standzeiten.

In einer Ausführungsform ist die Steuereinrichtung zum Steuern einer Behälterübergabeposition so ausgebildet, dass sie eine relative Drehwinkellage zwischen dem Transportkarussell und dem Sägezahnstern abhängig vom Behälterdurchmesser einstellen kann. Damit synchronisiert die Einrichtung zum Steuern der Behälterübergabeposition die Drehbewegung des Karussells mit der Drehbewegung des Sägezahnsterns abhängig vom Behälterdurchmesser so, dass an einer Behälterübergabeposition zu einem vorbestimmten getakteten Zeitpunkt eine Sterntasche der sägezahnförmigen Kontur über einer Behälteraufnahme des Transportkarussells liegt, so dass der Behälter auf dem Transportkarussell abgesetzt werden kann. Dies stellt sicher, dass eine korrekte Behälterübergabe stattfinden kann.

Traditionell wird die Synchronisation dadurch erreicht, dass das Transportkarussell und der Sägezahnstern von einem gemeinsamen Motor über entsprechende Mitnehmer angetrieben werden. Entsprechend dem Behälterdurchmesser variiert jedoch die Phasenlage bzw. die relative Drehwinkellage zwischen dem Transportkarussell und dem Sägezahnstern. Zu diesem Zweck kann die Einrichtung zum Steuern einer Behälterübergabeposition über eine mittels eines Aktuators verstellbare Steuerkurve verfügen, so dass eine definierte relative Winkellage zwischen dem Transportkarussell und dem Sägezahnstern abhängig von dem Behälterdurchmesser eingestellt werden kann. Da das Transportkarussell und der Sägezahnstern über einen gemeinsamen Motor angetrieben werden, sind die relativen Drehgeschwindigkeiten über Mitnehmer und Getriebe bereits miteinander synchronisiert.

Alternativ dazu können das Transportkarussell und der Sägezahnstern unabhängig voneinander mit getrennten Motoren angetrieben werden, wobei die Motoren von der Einrichtung zum Steuern einer Behälterübergabeposition so gesteuert werden, dass eine definierte relative Winkellage zwischen dem Transportkarussell und dem Sägezahnstern abhängig vom Behälterdurchmesser eingestellt werden kann. Dazu notwendig ist auch eine Synchronisierung der Drehgeschwindigkeiten der Motoren beispielsweise mittels Lagesensoren. Der Vorteil dieser Lösung liegt darin, dass die Anlage flexibler geregelt werden kann und damit auch flexibler betrieben werden kann. Beispielsweise kann ein größerer Sägezahnstern verwendet werden, ohne dass Getriebeanpassungen nötig werden.

In einer Ausführungsform umfasst die Transportvorrichtung weiterhin mindestens eine Zentrierglocke über mindestens einer Behälteraufnahme, beispielsweise einem Drehteller. Diese Ausführungsform umfasst weiterhin eine Bewegungseinrichtung zum Bewegen der Zentrierglocke und/oder der Behälteraufnahme in einer Umfangrichtung des Transportkarussells, wobei die Steuerungseinrichtung zum Steuern der Behälterübergabeposition die Bewegungseinrichtung so steuert, dass die Zentrierglocke und/oder die Behälteraufnahme in Abhängigkeit des Behälterdurchmessers an der Behälterübergabeposition über dem Behälter positioniert werden kann. In den meisten Fällen befindet sich bei dieser Ausführungsform über jeder Behälteraufnahme auf dem Transportkarussell eine Zentrierglocke.

Diese Ausführungsform kann alternativ zum Einstellen der relativen Drehwinkelanlage, wie es oben Beschrieben wurde oder in Erganzung dazu verwendet werden. Im Fall der alternativen Anpassung der Behälterübergabeposition erfolgt die Anpassung der Behälterübergabeposition aufgrund von unterschiedlichen Behälterdurchmessern ausschließlich durch Bewegen der Zentrierglocke und/oder der Behälteraufnahme. Erfolgt die Anpassung der Behälterübergabeposition im wesentlichen durch einstellen der relativen Drehwinkellage zwischen Karussell und Transportstern, können selbst bei korrekt eingestellter Drehwinkellage und Drehsynchronisation Positionsabweichungen der auf der Behälteraufnahme (Drehteller) abgesetzten Behältern auftreten oder entstehen. In diesem Fall kann die Bewegungseinrichtung für den Zentrierkegel, der beispielsweise beim Befüllen oder beim Etikettieren notwendig ist, und/oder die Behälteraufnahme zusätzlich eine Korrektur für die Behälterübergabeposition, die vom Behälterdurchmesser abhängt, vornehmen.

Die Steuerungseinrichtung zum Steuern der Behälterübergabeposition kann über eine mittels eines Aktuators verstellbare mechanische Steuerkurve verfügen, mit der die Zentrierglocke und/oder die Behälteraufnahme (140) in Abhängigkeit des Behälterdurchmessers in einer Umfangrichtung des Transportkarussells (150) und optional auch in radialer Richtung verschoben werden kann.

Alternativ dazu kann die Bewegungseinrichtung für die Zentrierglocke und/oder der Behälteraufnahme Linearmotoren umfassen, wobei die Steuerungseinrichtung zum Steuern der Behälterübergabeposition über eine anpassbare Steuerung für die Linearmotoren umfasst, so dass die Zentrierglocke und/oder die Behälteraufnahme (140) in Abhängigkeit des Behälterdurchmessers in einer Umfangrichtung des Transportkarussells und optional auch in radialer Richtung verschoben werden kann.

In einer Ausführungsform ist das elastische Element zwischen zwei übereinander voneinander beabstandet angeordneten und am Außenumfang ein Sägezahnprofil aufweisenden Sternringen angeordnet, und das elastische Element erstreckt sich zumindest teilweise in die Sterntaschen des Sägezahnprofils. Dadurch wird erreicht, dass die Sterntaschen zur Aufnahme von Behältern individuell und selbstregelnd sich an die Form und Größe der zu transportierenden Behälter anpasst.

In einer Ausführungsform ist das elastische Element ein Schwammband.

Vorteilhaft ist, wenn die Krümmung der Sägezahnkontur unterschiedliche Krümmungsradien aufweist mit kleineren Krümmungsradien in Richtung Außenrand des Sternrings und größeren Krümmungsradien im Bereich der Sägezahnkontur, die radial weiter innenliegen, so dass die Behälter einen besseren Halt in den sägezahnförmigen Ausnehmungen finden. Beispielsweise können die sägezahnförmigen Ausnehmungen zumindest teilweise eine Kontur eines Spiralabschnitts aufweisen.

Um auf einfache Weise einen Formatwechsel, d.h. einen Behälter mit einem anderen Durchmesser, mit möglichst kurzen Rüstzeiten zu ermöglichen, umfasst die Transportvorrichtung weiterhin eine Eingabevorrichtung zur Eingabe des Behälterdurchmessers. Alternativ dazu kann der Behälterdurchmesser automatisch durch entsprechende Sensorik erfasst werden. Dadurch wird die Umrüstung weiter vereinfacht. In einer Ausführungsform ist die Behälterbehandlungsmaschine eine Etikettiereinrichtung zum Etikettieren der Behälter oder eine Abfülleinrichtung.

Üblicherweise wird der Sägezahnstern mit dem elastischen Element sowohl als Einlaufstern als auch als Auslaufstern verwendet.

Die obengenannte Aufgabe wird auch durch eine Behälterbehandlungsmaschine für aufrecht stehende rotationssymmetrische Behälter gelöst, die ein Transportkarussell, einen Transportstern am Maschineneinlauf und/oder Maschinenauslauf, und mindestens eine Behandlungsstation umfasst. Der Transportstern umfasst mehrere übereinander liegende Sternräder mit einer Sägezahnkontur und einem dazwischen montierten elastischem Element, vorzugsweise einem Schwammband. Weiterhin schließt die Behälterbehandlungsmaschine eine Steuerungseinrichtung zum Steuern einer Behälterübergabeposition zwischen dem Karussell und dem Transportstern abhängig von einem Behälterdurchmesser ein.

Im Folgenden werden Ausführungsbeispiele, Weiterbildungen, Vorteile und Anwendungsmöglichkeiten der Erfindung anhand der beigefügten Figuren näher erläutert. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht. In den Figuren zeigt
- Fig. 1: eine schematische Ansicht eines Teils einer Transportvorrichtung gemäß dem Stand der Technik;
- Fig. 2: eine schematische Ansicht einer Transportvorrichtung gemäß der vorliegenden Erfindung; und
- Fig. 3: eine schematische Ansicht der Transportvorrichtung gemäß der vorliegenden Erfindung, die den Aspekt der Veränderung der relativen Winkellage zwischen Transportkarussell und Sägezahnstern bei kleinem Behälterdurchmesser veranschaulicht.

Die vorliegende Erfindung erfolgte allgemein, um die Rüstzeiten bei Transportvorrichtungen zum Transport von aufrechtstehenden, rotationssymmetrischen Behältern wie beispielsweise Flaschen bei einem Wechsel der Behältergrößen/Durchmesser zu reduzieren. Da bei herkömmlichen Transportsternen die Sterntaschen zur Aufnahme der Behälter auf die Behältergeometrie angepasst sind, ist es nötig, die Sternräder, in die Ausnehmungen (Sterntaschen) eingearbeitet sind, bei einem Behälterwechsel bzw. Formatwechsel auszutauschen, was zu langen Rüstzeiten führt, was personalintensiv ist und zu längeren Stillständen in der Anlage führt. Um dies zu beheben, wird erfindungsgemäß ein Transportstern bereitgestellt, der sich automatisch selbstregelnd an verschiedene Behälterdurchmesser im Bereich von weniger Zentimetern bis mehr als 10 Zentimeter anpassen kann. Da die Lage eines Behälters im Transportstern, die bei der definierten Übergabe des Behälters an das nachfolgende Karussell wichtig ist, vom Durchmesser abhängt, werden diese Lagedifferenzen durch entsprechende Einrichtungen und Steuerungen abhängig vom Behälterdurchmesser gesteuert und eingestellt bzw. kompensiert. Damit werden Positionierfehler bei der Übergabe vom Transportstern zum Transportkarussell ausgeglichen, so dass ein Behälter vom Transportstern auf beispielsweise einen Drehteller am Transportkarussell sicher abgesetzt werden kann und nicht neben den Drehtellern positioniert wird.

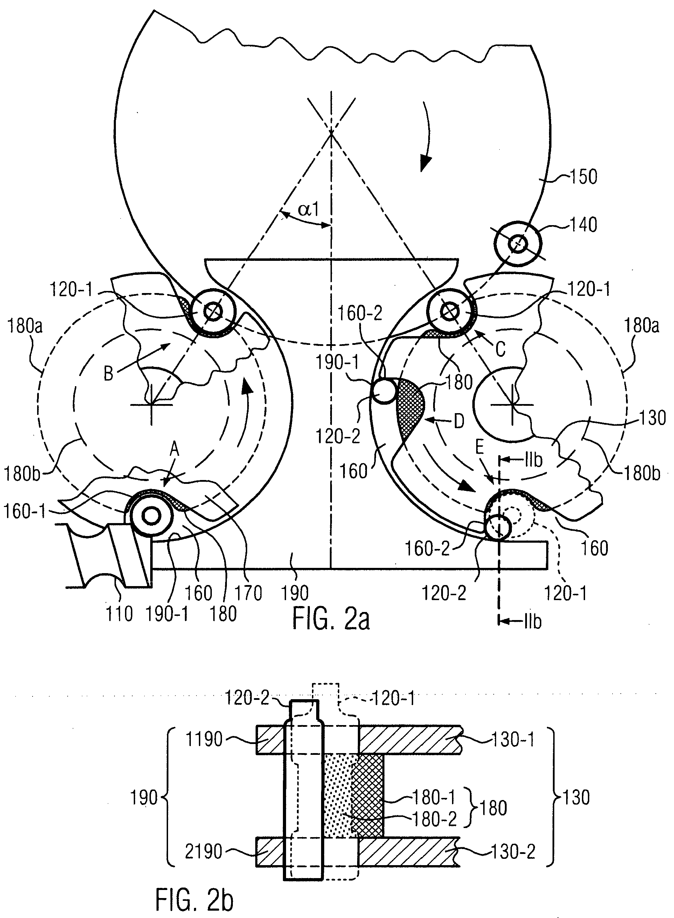

Fig. 2 zeigt schematisch eine Transportvorrichtung für eine Behälterbehandlungsmaschine gemäß der vorliegenden Erfindung, in der verschiedene Aspekte der vorliegenden Erfindung veranschaulicht werden.

In Fig. 2A bezeichnet das Bezugszeichen 150 eine Transportkarussell, das Bezugszeichen 140 eine Behälteraufnahme am Karussell wie beispielsweise einen Drehteller, Fig. 170 einen Einlaufstern, Fig. 130 einen Auflaufstern, das Bezugszeichen 110 eine Einteilschnecke, das Bezugszeichen 180 ein elastisches Element und Bezugszeichen 190 ein Führungselement. Der Einlaufstern 170 und der Auslaufstern 130 sind im Wesentlichen gleich aufgebaut. Jeder Transportstern 130 und 170 umfasst zwei Sternräder, die konzentrisch übereinanderliegen, und die eine sägezahnförmige Kontur aufweisen, die sägezahnförmige Ausnehmungen bzw. Taschen 160, so genannte Sterntaschen, zur Aufnahme von Behältern mit unterschiedlicher Größe 120-1 und 120-2 aufweisen. In der Fig. 2A, die eine Draufsicht darstellt, ist nur das obere Sternrad bzw. Ausschnitte der Sternräder für den Einlaufstern 170 und den Auslaufstern 130 sichtbar. Zwischen den beiden Sternringen eines jeden Transportsterns 130 und 170 ist ein elastisches Element 180 angeordnet, das zumindest teilweise in den Sterntaschenbereich hineinragt. Die gestrichelte Linie 180A zeigt die äußere Konturlinie des elastischen Elements 180 und die gestrichelte Linie 180B zeigt die innere Konturlinie des elastischen Elements 180. In der Fig. 2A ist das elastische Element 180 als elastischer Ring konzentrisch zu und zwischen den Sternringen beispielsweise in Form eines Schwammbandes beispielsweise an einer Sternnabe montiert.

In Fig. 2A werden Behälter von einer Einteilschnecke 110 von einem kontinuierlichen Strom von Behältern dem Einlaufstern 170 im definierten Abstand zugeführt und an der Position A an den Einlaufstern 170 übergeben. An der Position A ist ein Behälter 120-1 mit großem Durchmesser gezeigt, der das elastische Element 180 weitgehend aus der Sterntasche 160 der sägezahnförmigen Ausnehmung herausdrückt. Der Einlaufstern 170 überbrückt die Distanz von der Einteilschnecke 110 zum Transportkarussell 150, an die eine oder mehrere Behandlungsaggregate für Behälter, beispielsweise Etikettieraggregate oder Befüllungsaggregate (nicht gezeigt) angeordnet sein können. Durch die Drehbewegung gegen den Uhrzeigersinn (siehe Pfeilrichtung) und durch die elastischen Kräfte des elastischen Elements 180 wird der Behälter 120-1 an einem Abschnitt 160-1 der sägezahnförmigen Ausnehmung 160 bzw. Sterntasche und gegen eine Gegendruckfläche 190-1 des Führungselementes 190 gedrückt und entlang des Führungselementes 190 in Richtung Transportkarussell 150 transportiert. Bei richtig eingestelltem Timing und Ausrichtung des Transportkarussells 150 relativ zum Einlaufstern 170 befindet sich eine Behälteraufnahme 140 (beispielsweise ein Drehteller) direkt unterhalb des Behälters 120-1, wenn er die Position B erreicht. In der beispielhaften Anordnung von Fig. 2 ist der Mittelpunkt der Behälteraufnahme 140 am äußeren Rand des Transportkarussells 150 angebracht. Eine exakte Ausrichtung des Einlaufsterns 170 zum Transportkarussell 150 ist also dann erreicht, wenn der Mittelpunkt des Behälters 120-1 im Einlaufstern 170 den Außenrand des Transportkarussells 150 erreicht. In Fig. 2A ist diese Situation an der Position B erreicht. In Fig. 2A dreht sich das Transportkarussell 150 im Uhrzeigersinn und der Drehwinkel, um den sich eine Behälteraufnahme von der untersten Position entfernt haben muss, um an die konkrete Übergabeposition B zu gelangen, wird Übergabewinkel α1 genannt. Bei der Darstellung in Fig. 2A ist eine Situation gezeigt, in der der Behälter 120-1 an der Position B direkt über einer Behälteraufnahme 140 bzw. einem Drehteller liegt.

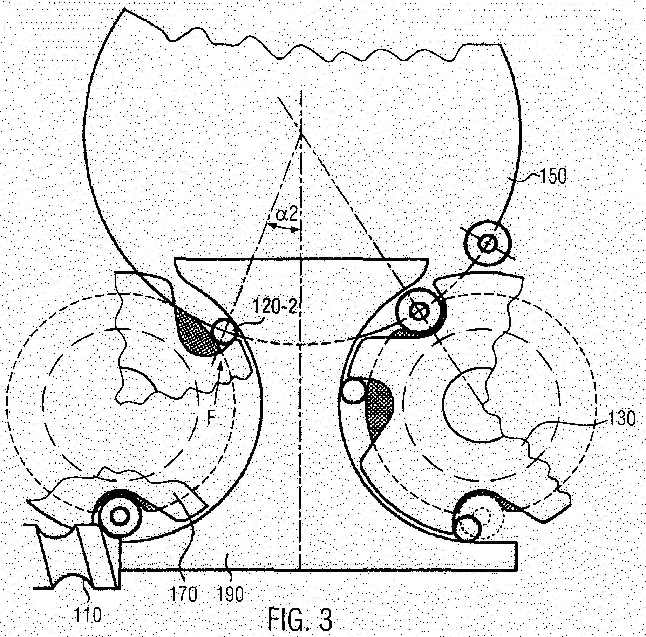

Im Fall eines kleineren Behälters, der in der Fig. 2A mit 120-2 bezeichnet wird, liegt der Mittelpunkt des Behälters 120-2 näher am Rand des Transportsterns, wie an der Position D und E im Auslaufstern 130 veranschaulicht wird. Die elastische Kraft des elastischen Elements 180, das im Fall des kleinen Behälters 120-2 nur geringfügig komprimiert wird, in Verbindung mit der Bewegung gegen den Uhrzeigersinn (siehe Pfeil) drückt den Behälter 120-2 gegen einen zweiten Abschnitt 160-2 der sägezahnförmigen Sterntasche 160 und gegen eine Gegendruckfläche 190-1 des Führungselements 190. Mit Bezug auf Fig. 3 ist zu erkennen, dass der Mittelpunkt des kleineren Behälters s120-2 an der Position F des Einlaufsterns 170 bei der Drehbewegung gegen den Uhrzeigersinn früher das Transportkarussell 150 erreicht als dies beim größeren Behälter 120-1 in Fig. 2A an der Position B der Fall ist. Entsprechend ist der Übergabewinkel α2 bei dem kleineren Behälter 120-2 kleiner als der Übergabewinkel α1 des größeren Behälters 120-1. Da sich bei den Einstellungen gemäß der Fig. 2A am Übergabewinkel α2 keine Behälteraufnahme 140 bzw. Teller befindet, ist eine Behälterübergabe vom Einlaufstern zum Transportkarussell unter den in Fig. 2A dargestellten Bedingungen nicht möglich. Die vorliegende Erfindung sieht deshalb vor, die Übergabeposition entsprechend dem Behälterdurchmesser anzupassen. Die Einrichtung zum Anpassen bzw. Steuern des Übergabewinkels α1 bzw. α2 ist in verschiedenen Ausführungsformen realisierbar.

In einer ersten Ausführungsform werden der Einlaufstern 170 bzw. der Auslaufstern 130 und das Transportkarussell 150 von einem gemeinsamen Motor über entsprechende Getriebeeinheiten angetrieben. Bei einer festen Anzahl von Zähnen in den Transportsternen und einer festen Anzahl von Behälteraufnahmen 140 auf dem Transportstern 150 können die Getriebeeinheit so dimensioniert werden, dass für einen bestimmten Behälterdurchmesser eine exakte Übergabeposition eingestellt werden kann. Die Drehbewegung des Einlaufsterns 170 bzw. des Auslaufsterns 130 und des Transportkarussells 150 läuft automatisch synchron. Bei Änderung des Behälterdurchmessers ändert sich nichts an der Geschwindigkeit. Jedoch die Phasenlage, d.h. der Übergabewinkel verändert sich, so dass die Drehbewegung des Transportkarussells 150 mit einem Offsetwinkel versehen werden muss. In den Situationen, die in Fig. 2Ä und 3 dargestellt sind, wäre der Offsetwinkel αOffset = α1-α2. Dieser Offsetwinkel kann beispielsweise über eine mittels eines Aktuators verstellbare Steuerkurve eingestellt werden. Wenn beispielsweise ein Behälter mit dem Durchmesser d1 durch einen Behälter mit dem Durchmesser d2 ersetzt werden soll, wird in ein Eingagegerät der neue Behälterdurchmesser d2 eingegeben und ein Aktuator (nicht gezeigt) verstellt die Hubkurve so, dass sich der neue Übergabewinkel α2 einstellt, d.h. das Transportkarussell 150 wird so um den Offsetwinkel αOffset verschoben, dass am Übergabewinkel α2 sich eine Behälteraufnahme 140 befindet.

In einer anderen Ausführungsform werden der Einlaufstern 170 bzw. der Auslaufstern 130 und das Transportkarussell 150 von getrennten Servomotoren angetrieben. In diesem Fall werden Lagedaten und Drehgeschwindigkeitsdaten von jedem Stern 130 und 170 und von dem Transportkarussell 150 individuell erfasst und einer Steuerung zugeführt, die die Rotationen synchronisiert und die Übergabewinkel einstellt.

In einer weiteren Ausführungsform können Zentrierglocken über den Behälteraufnahmen 140 angeordnet sein, die die Behälter beispielsweise am Flaschenhals festhalten und in der Lage sind, die Behälter zu zentrieren, zu rotieren oder andere Bewegungen auszuführen. In diesem Fall können die Zentrierglocken (nicht gezeigt) verwendet werden, den Offsetwinkel für den Übergabewinkel zu kompensieren. Beispielsweise kann die Zentrierglocke in Umfangsrichtung durch eine mechanisch betätigbare Steuerkurve in Abhängigkeit von einem Behälterdurchmesser bewegt werden. Alternativ dazu kann die Zentrierglocke auch durch individuell gesteuerte Servomotoren in Abhängigkeit vom Behälterdurchmesser in Umfangsrichtung so bewegt werden, dass der Offsetwinkel für die Übergabeposition abhängig vom Behälterdurchmesser kompensiert wird. Dasselbe kann auch für die Behälteraufnahme 140 angewendet werden.

Zurück zu Fig. 2A wird der Behälter 120-1 bzw. 120-2 nach der Übernahme auf das Transportkarussell 150 einer oder mehreren Behandlungsaggregaten (nicht gezeigt) wie beispielsweise Etikettieraggregate oder Befüllungsaggregate zugeführt. Nach Durchlaufen eines Drehzyklusses auf dem Transportkarussell 150 nähert sich der Behälter dem Auslaufstern 130 und wird an der Position C in einer sägezahnförmigen Sterntasche des Auslaufstern aufgenommen und über die Position D zur Position E durch die Drehbewegung gegen den Uhrzeigersinn befördert, wo der Behälter 120-1 bzw. 120-2 an ein Förderband (nicht gezeigt) übergeben wird. An der Position E ist mit der gestrichelten Linie zwischen IIb und IIb ein Schnitt gekennzeichnet, der in Fig. 2B näher dargestellt ist.

Fig. 2B zeigt genauer den Aufbau des Einlauf- bzw. Auslaufstern 130 bzw. 170 und zeigt auch die Wirkungsweise im Zusammenspiel mit einem kleinen Behälter 120-2 bzw. einem großen Behälter 120-1 und dem Führungselement 190. In Fig. 2B ist beispielhaft der Auslaufstern 130 gezeigt. Dasselbe gilt aber auch für den Einlaufstern 170. In Fig. 2B enthält der Auslaufstern 130 ein oberes Sternrad 130-1 und ein unteres Sternrad 130-2. Dazwischen liegend befindet sich das elastische Element 180. Ein Behälter, der in einer Sterntasche der Sternräder 130-1 und 130-2 liegt, komprimiert das elastische Element 180. Im Fall einer großen Flasche 120-1 wird das elastische Element 180-1 stärker komprimiert als bei einer kleineren Flasche 120-2. Das weniger komprimierte elastische Element wird mit 180-2 bezeichnet. Das elastische Element 180-1 bzw. 180-2 drückt den Behälter 120-1 bzw. 120-2 einerseits an die Sägezahnkontur des Sternrads und andererseits an das Führungselement 190, das aus zwei Elementen 1190 und 2190 zusammengesetzt ist, die in Form von Platten parallel zueinander mit dem gleichen Abstand wie der Abstand zwischen dem oberen Sternrad 130-1 und dem unteren Sternrad 130-2 angeordnet sind.

Die sägezahnförmige Kontur ist in einer Ausführungsform so ausgebildet, dass die Krümmung unterschiedliche Radien aufweist, vorzugsweise mit Radien, die sich kontinuierlich von der Innenseite der Ausnehmung zur Außenseite zum Sternrad verkleinert. So wird sichergestellt, dass die Behälter mit unterschiedlichen Durchmessern besser in Sterntaschen fixiert werden. Da Behälter mit kleinem Durchmesser weiter außen gehalten werden als Behälter mit großem Durchmesser, verkleinert sich vorzugsweise der Krümmungsradius in radialer Richtung nach außen.

## Patentansprüche

1. Transportvorrichtung für eine Behälterbehandlungsmaschine mit einem Transportkarussell (150), auf dem sich eine Vielzahl von Behälteraufnahmen (140) befinden, und mit mindestens einem Sägezahnstern (130, 170), dessen Sägezahnkontur eine Vielzahl von Sterntaschen (160) zum Aufnehmen von Behältern (120-1, 120-2) bilden,
**gekennzeichnet durch**
ein elastisches Element (180), das im Sägezahnstern (130, 170) integriert ist und das einen Behälter (120-1, 120-2) abhängig vom Behälterdurchmesser an einer bestimmten Stelle in einer der Sterntaschen (160) des Sägezahnsterns (130, 170) halten kann; und
eine Steuereinrichtung zum Steuern einer Behälterübergabeposition zwischen dem Transpörtkarussell (150) und dem Sägezahnstern (130, 170) abhängig vom Behälterdurchmesser.

2. Transportvorrichtung nach Anspruch 1, wobei die Steuereinrichtung zum Steuern einer Behälterübergabeposition eine relative Drehwinkellage zwischen dem Transportkarussell (150) und dem Sägezahnstern (130, 170) abhängig vom Behälterdurchmesser einstellt.

3. Transportvorrichtung nach Anspruch 1, wobei das Transportkarussell (150) und der Sägezahnstern (130, 170) von einem gemeinsamen Motor angetrieben werden, und wobei die Steuereinrichtung zum Steuern einer Behälterübergabeposition über eine mittels eines Aktuators verstellbare Steuerkurve verfügt, über die eine definierte relative Winkellage zwischen dem Transportkarussell (150) und dem Sägezahnstern (130, 170) abhängig vom Behälterdurchmesser eingestellt werden kann.

4. Transportvorrichtung nach Anspruch 1 oder 2, wobei das Transportkarussell (150) und der Sägezahnstern (130, 170) unabhängig voneinander mit getrennten Motoren angetrieben werden, wobei die Motoren von der Steuereinrichtung zum Steuern einer Behälterübergabeposition so gesteuert werden, dass eine definierte relative Winkellage zwischen dem Transportkarussell (150) und dem Sägezahnstern (130, 170) abhängig vom Behälterdurchmesser eingestellt werden kann.

5. Transportvorrichtung nach einem der Ansprüche 1 bis 4, die weiterhin folgendes umfasst:
mindesten eine Zentrierglocke über mindestens einer Behälteraufnahme (140),
eine Bewegungseinrichtung zum Bewegen der Zentrierglocke und/oder der Behälteraufnahme (140) in einer Umfangrichtung des Transportkarussells (150),
wobei die Steuerungseinrichtung zum Steuern der Behälterübergabeposition die Bewegungseinrichtung so steuert, dass die Zentrierglocke und/oder die Behälteraufnahme (140) in Abhängigkeit des Behälterdurchmessers an der Behälterübergabeposition über dem Behälter (120-1, 120-2) positioniert werden kann.

6. Transportvorrichtung nach Anspruch 5, wobei die Steuerungseinrichtung zum Steuern der Behälterübergabeposition über eine mittels eines Aktuators verstellbare mechanische Steuerkurve verfügt, mit der die Zentrierglocke und/oder die Behälteraufnahme (140) in Abhängigkeit des Behälterdurchmessers in einer Umfangrichtung des Transportkarussells (150) verschoben werden kann.

7. Transportvorrichtung nach Anspruch 5 oder 6, wobei die Bewegungseinrichtung für die Zentrierglocke Linearmotoren umfasst, und wobei die Steuerungseinrichtung zum Steuern der Behälterübergabeposition über eine anpassbare Steuerung für die Linearmotoren umfasst, so dass die Zentrierglocke und/oder die Behälteraufnahme (140) in Abhängigkeit des Behälterdurchmessers in einer Umfangrichtung des Transportkarussells (150) verschoben werden kann.

8. Transportvorrichtung nach einem der Ansprüche 1 bis 7, wobei das elastische Element (180) zwischen zwei übereinander voneinander beabstandet angeordneten und am Außenumfang ein Sägezahnprofil aufweisenden Sternringen (130-1, 130-2) angeordnet ist, und wobei sich das elastische Element (180) zumindest teilweise in die Sterntaschen (160) des Sägezahnprofils erstreckt.

9. Transportvorrichtung nach Anspruch 8, wobei das elastische Element (150) ein Schwammband ist.

10. Transportvorrichtung nach einem der Ansprüche 1 bis 4, wobei jede der Sterntaschen (160) eine Kontur mit unterschiedlichen Radien an unterschiedlichen Positionen der Kontur aufweist.

11. Transportvorrichtung nach einem der Ansprüche 1 bis 10, die weiterhin eine Eingabevorrichtung zur Eingabe des Behälterdurchmessers umfasst.

12. Transportvorrichtung nach einem der Ansprüche 1 bis 10, die weiterhin eine Einrichtung zum automatischen Erfassen des Behälterdurchmessers umfasst.

13. Transportvorrichtung nach einem der vorherigen Ansprüche, wobei die Behälterbehandlungsmaschine eine Etikettiereinrichtung zum Etikettieren der Behälter oder eine Fülleinrichtung zum Befüllen der Behälter ist.

14. Transportvorrichtung nach einem der vorherigen Ansprüche, die einen Einlaufstern (170) und einen Auslaufstern (130) aufweist, die jeweils als Sägezahnstern mit elastischem Element (180) ausgeführt sind.

15. Behälterbehandlungsmaschine für aufrecht stehende rotationssymmetrische Behälter mit einem Transportkarussell, einem Transportstern am Maschineneinlauf und/oder Maschinenauslauf, und mindestens einer Behandlungsstation,
wobei der Transportstern mehrere übereinander liegende Sternräder mit einer Sägezahnkontur und einem dazwischen montierten elastischem Element, vorzugsweise einem Schwammband umfasst, und
wobei die Behälterbehandlungsmaschine eine Steuerungseinrichtung einschließt, zum Steuern einer Behälterübergabeposition zwischen dem Karussell (150) und dem Transportstern (130, 170) abhängig von einem Behälterdurchmesser.

## Claims

1. Transport device for a container handling machine with a transport carousel (150) on which a plurality of container receptacles (140) are positioned, and with at least one sawtooth starwheel (130, 170), the sawtooth contour of which forms a plurality of starwheel pockets (160) for receiving containers (120-1, 120-2),
**characterized by**
an elastic element (180) which is integrated in the sawtooth starwheel (130, 170) and which can hold a container (120-1, 120-2), depending on the container diameter, at a specific place in one of the starwheel pockets (160) of the sawtooth starwheel (130, 170); and
a control device for controlling a container transfer position between the transport carousel (150) and the sawtooth starwheel (130, 170), depending on the container diameter.

2. Transport device according to claim 1, wherein the control device for controlling a container transfer position adjusts a relative rotation angle position between the transport carousel (150) and the sawtooth starwheel (130, 170), depending on the container diameter.

3. Transport device according to claim 1, wherein the transport carousel (150) and the sawtooth starwheel (130, 170) are driven by a joint motor, and wherein the control device for controlling a container transfer position has a control cam which is adjustable by means of an actuator and through which a defined relative angular position between the transport carousel (150) and the sawtooth starwheel (130, 170) can be adjusted depending on the container diameter.

4. Transport device according to claim 1 or 2, wherein the transport carousel (150) and the sawtooth starwheel (130, 170) are driven independently of each other with separated motors, wherein the motors are controlled by the control device for controlling a container transfer position in such a manner that a defined relative angular position between the transport carousel (150) and the sawtooth starwheel (130, 170) can be adjusted depending on the container diameter.

5. Transport device according to any one of claims 1 to 4, further comprising the following:
at least one centering bell above at least one container receptacle (140),
a moving device for moving the centering bell and/or the container receptacle (140) in a circumferential direction of the transport carousel (150),
wherein the control device for controlling the container transfer position controls the moving device such that the centering bell and/or the container receptacle (140) can be positioned, depending on the container diameter, at the container transfer position above the container (120-1, 120-2).

6. Transport device according to claim 5, wherein the control device for controlling the container transfer position has a mechanical control cam which is adjustable by means of an actuator and with which the centering bell and/or the container receptacle (140) can be shifted, depending on the container diameter, in a circumferential direction of the transport carousel (150).

7. Transport device according to claim 5 or 6, wherein the moving device for the centering bell comprises linear motors, and wherein the control device for controlling the container transfer position comprises an adaptable control for the linear motors, so that the centering bell and/or the container receptacle (140) can be shifted, depending on the container diameter, in a circumferential direction of the transport carousel (150).

8. Transport device according to any one of claims 1 to 7, wherein the elastic element (180) is arranged between two superposed spaced-apart starwheel rings (130-1, 130-2) which have a sawtooth profile on the outer circumference, and wherein the elastic element (180) extends at least in part into the starwheel pockets (160) of the sawtooth profile.

9. Transport device according to claim 8, wherein the elastic element (150) is a sponge belt.

10. Transport device according to any one of claims 1 to 4, wherein each of the starwheel pockets (160) has a contour with different radii at different positions of the contour.

11. Transport device according to any one of claims 1 to 10, which further comprises an input device for the input of the container diameter.

12. Transport device according to any one of claims 1 to 10, which further comprises a device for automatically sensing the container diameter.

13. Transport device according to any one of the preceding claims, wherein the container handling machine is a labeling device for labeling the containers, or a filling device for filling the containers.

14. Transport device according to any one of the preceding claims, which comprises an infeed starwheel (170) and an outfeed starwheel (130), each being designed as a sawtooth starwheel with elastic element (180).

15. Container handling machine for upright rotation-symmetrical containers with a transport carousel, a transport starwheel at the machine inlet and/or machine outlet, and at least one handling station,
wherein the transport starwheel comprises a plurality of superposed starwheels with a sawtooth contour and an elastic element mounted thereinbetween, preferably a sponge belt, and
wherein the container handling machine encloses a control device for controlling a container transfer position between the carousel (150) and the transport starwheel (130, 170), depending on the container diameter.

## Revendications

1. Dispositif de transport pour une machine de traitement de récipients ou contenants comprenant une table rotative ou un carrousel de transport (150), sur lequel se trouvent un grand nombre de logements d'accueil de contenant (140), et comprenant au moins une étoile en dents de scie (130, 170) dont le contour en dents de scie forme un grand nombre de cavités d'étoile (160) destinées à accueillir des contenants (120-1, 120-2)
**caractérisé par**
un élément élastique (180), qui est intégré à l'étoile en dents de scie (130, 170) et peut maintenir un contenant (120-1, 120-2), en fonction du diamètre de contenant, à un endroit déterminé dans l'une des cavités d'étoile (160) de l'étoile en dents de scie (130, 170) ; et
un dispositif de commande pour commander une position de transfert de contenant entre le carrousel de transport (150) et l'étoile en dents de scie (130, 170) en fonction du diamètre de contenant.

2. Dispositif de transport selon la revendication 1, dans lequel pour commander une position de transfert de contenant, le dispositif de commande règle une position d'angle de rotation relative entre le carrousel de transport (150) et l'étoile en dents de scie (130, 170), en fonction du diamètre de contenant.

3. Dispositif de transport selon la revendication 1, dans lequel le carrousel de transport (150) et l'étoile en dents de scie (130, 170) sont entraînés par un moteur commun, et dans lequel le dispositif de commande pour commander une position de transfert de contenant, dispose d'une came de commande pouvant être déplacée par un actionneur et par l'intermédiaire de laquelle il est possible de régler une position angulaire relative définie entre le carrousel de transport (150) et l'étoile en dents de scie (130, 170), en fonction du diamètre de contenant.

4. Dispositif de transport selon la revendication 1 ou la revendication 2, dans lequel le carrousel de transport (150) et l'étoile en dents de scie (130, 170) sont entraînés indépendamment l'un de l'autre à l'aide de moteurs séparés, les moteurs étant commandés par le dispositif de commande pour commander une position de transfert de contenant, de manière à pouvoir régler une position angulaire relative définie entre le carrousel de transport (150) et l'étoile en dents de scie (130, 170), en fonction du diamètre de contenant.

5. Dispositif de transport selon l'une des revendications 1 à 4, comprenant en outre :
au moins une cloche de centrage au-dessus d'au moins un logement d'accueil de contenant (140),
un dispositif de déplacement pour déplacer la cloche de centrage et/ou le logement d'accueil de contenant (140) dans une direction périphérique du carrousel de transport (150),
le dispositif de commande pour commander la position de transfert de contenant commandant le dispositif de déplacement de manière telle, que la cloche de centrage et/ou le logement d'accueil de contenant (140) puisse être positionné, en fonction du diamètre de contenant, au niveau de la position de transfert de contenant, au-dessus du contenant (120-1, 120-2).

6. Dispositif de transport selon la revendication 5, dans lequel le dispositif de commande pour commander la position de transfert de contenant dispose d'une came de commande mécanique, déplaçable au moyen d'un actionneur, à l'aide de laquelle il est possible de faire coulisser la cloche de centrage et/ou le logement d'accueil (140) dans une direction périphérique du carrousel de transport (150), en fonction du diamètre de contenant.

7. Dispositif de transport selon la revendication 5 ou la revendication 6, dans lequel le dispositif de déplacement pour la cloche de centrage comprend des moteurs linéaires, et dans lequel le dispositif de commande pour commander la position de transfert de contenant comprend une commande adaptative pour les moteurs linéaires, de manière qu'il soit possible de faire coulisser la cloche de centrage et/ou le logement d'accueil de contenant (140) dans une direction périphérique du carrousel de transport (150), en fonction du diamètre de contenant.

8. Dispositif de transport selon l'une des revendications 1 à 7, dans lequel l'élément élastique (180) est agencé entre deux anneaux d'étoile (130-1, 130-2) disposés l'un au-dessus de l'autre et à distance l'un de l'autre et présentant un profil en dents de scie à la périphérie extérieure, et dans lequel l'élément élastique (180) s'étend au moins partiellement à l'intérieur des cavités d'étoile (160) du profil en dents de scie.

9. Dispositif de transport selon la revendication 8, dans lequel l'élément élastique (150) est une bande d'éponge ou de mousse.

10. Dispositif de transport selon l'une des revendications 1 à 4, dans lequel chacune des cavités d'étoile (160) présente un contour avec différents rayons en différentes positions du contour.

11. Dispositif de transport selon l'une des revendications 1 à 10, comprenant, en outre, un dispositif de saisie pour introduire ou saisir le diamètre de contenant.

12. Dispositif de transport selon l'une des revendications 1 à 10, comprenant, en outre, un dispositif pour relever automatiquement le diamètre de contenant.

13. Dispositif de transport selon l'une des revendications précédentes, dans lequel la machine de traitement de contenants est une installation d'étiquetage pour étiqueter les contenants ou une installation de remplissage pour remplir les contenants.

14. Dispositif de transport selon l'une des revendications précédentes, qui comporte une étoile d'entrée ou d'alimentation (170) et une étoile de sortie (130), qui sont réalisées chacune en tant qu'étoile en dents de scie avec un élément élastique (180).

15. Machine de traitement de contenants pour des contenants à symétrie de rotation, en position débout, comprenant un carrousel de transport, une étoile de transport à l'entrée de machine et/ou à la sortie de machine, et au moins un poste de traitement,
l'étoile de transport comprenant plusieurs roues d'étoile superposées, qui présentent un contour en dents de scie, et entre lesquelles est monté un élément élastique, de préférence une bande en éponge ou en mousse, et
la machine de traitement de contenants englobant un dispositif de commande pour commander une position de transfert de contenant entre le carrousel de transport (150) et l'étoile de transport (130, 170), en fonction d'un diamètre de contenant.
